Europäisches Patentamt

European Patent Office

Office européen des brevets

(19)

(11) **EP 1 013 122 B1**

(12) **FASCICULE DE BREVET EUROPEEN**

(45) Date de publication et mention
de la délivrance du brevet:
**26.05.2004 Bulletin 2004/22**

(21) Numéro de dépôt: **98943970.8**

(22) Date de dépôt: **11.09.1998**

(51) Int Cl.⁷: **H04Q 7/36**

(86) Numéro de dépôt international:
**PCT/FR1998/001951**

(87) Numéro de publication internationale:
**WO 1999/014968 (25.03.1999 Gazette 1999/12)**

(54) **ESTIMATION PREVISIONNELLE DU RAPPORT SIGNAL A INTERFERENCES DANS UN RESEAU CELLULAIRE DE RADIOCOMMUNICATIONS**

**VORLÄUFIGE SCHÄTZUNG DES SIGNAL-INTERFERENZVERHÄLTNISSES IN EINEM ZELLULAREN FUNKKOMMUNIKATIONSNETZ**

**PRO-ACTIVE ESTIMATION OF INTERFERENCE SIGNAL RATIO IN A RADIOCOMMUNICATION CELLULAR NETWORK**

(84) Etats contractants désignés:
**DE FI GB SE**

(30) Priorité: **12.09.1997 FR 9711467**

(43) Date de publication de la demande:
**28.06.2000 Bulletin 2000/26**

(73) Titulaire: **NORTEL NETWORKS SA**
**78280 Guyancourt (FR)**

(72) Inventeur: **BILLON, Thierry**
**F-92800 Puteaux (FR)**

(74) Mandataire: **Loisel, Bertrand et al**
**Cabinet Plasseraud**
**65/67 rue de la Victoire**
**75440 Paris Cedex 09 (FR)**

(56) Documents cités:
**EP-A- 0 458 158**          **WO-A-96/38997**
**WO-A-97/14260**

## Description

La présente invention concerne un dispositif prévu pour fournir une estimation prévisionnelle du rapport signal à interférences de la liaison entre un terminal et un réseau cellulaire de radiocommunications.

Un exemple type de réseau cellulaire est le système GSM maintenant largement répandu. Les références concrètes destinées à faciliter la compréhension de l'exposé qui suit seront donc liées à ce système sans qu'il faille voir là une limitation du domaine d'application de l'invention.

Le domaine concerné est donc celui des réseaux cellulaires. Ainsi, une cellule utilise des fréquences de transmission qui ne sont utilisées dans aucune des cellules qui sont ses plus proches voisines. En adoptant la représentation classique de cellules hexagonales, une cellule quelconque possède six plus proches voisines.

Dans les réseaux du type GSM, il est prévu une fréquence balise nommée BCCH par cellule. Cette fréquence balise est notamment utilisée pour établir la connexion initiale d'un terminal au réseau, c'est-à-dire pour acheminer les informations de signalisation nécessaires au fonctionnement de ce terminal dès que celui-ci est mis en service. On comprend bien que ces fréquences balises diffusées par les différentes cellules doivent assumer la couverture globale d'un réseau dans les conditions de propagation les plus défavorables. Cela signifie qu'un terminal, quelle que soit sa position, doit pouvoir recevoir dans des conditions satisfaisantes l'une au moins de ces fréquences balises. Les réseaux sont donc conçus de sorte que les fréquences balises assurent une qualité de service convenable en toutes circonstances.

Il est ainsi courant que l'on utilise pour ces fréquences balises un motif de réutilisation à douze cellules ou même plus. Pour simplifier la présentation de l'invention on adopte ici un motif à sept cellules : une fréquence balise distincte est attribuée à chacune des cellules formant un motif composé d'une cellule centrale et de ses six plus proches voisines. La solution la plus sûre, quant à l'exploitation d'un réseau, consiste naturellement à utiliser le même motif à sept cellules pour toutes les fréquences disponibles, en particulier pour les fréquences de trafic prévues pour les communications proprement dites.

Il arrive cependant que le motif à sept cellules, s'il est appliqué pour l'ensemble des fréquences du réseau, ne permette pas d'assurer le nombre requis de communications dans une cellule. En effet, le nombre de communications par fréquence est une constante du réseau (une pour les systèmes AMRF, huit pour le GSM). D'autre part, le nombre des fréquences disponibles dans une cellule est d'autant plus faible que le taux de réutilisation est faible, ce taux étant défini comme l'inverse du nombre de cellules du motif de réutilisation.

Le besoin est donc apparu d'employer un motif à plus fort taux de réutilisation pour certaines au moins des fréquences de trafic. On connaît le motif à quatre cellules. On connaît également le motif à trois cellules qui est celui présentant le plus fort taux de réutilisation dans une architecture cellulaire où l'on s'interdit d'utiliser une même fréquence dans deux cellules adjacentes. Pour mémoire, le motif à trois cellules est formé de trois hexagones adjacents possédant un sommet commun.

La demande de brevet WO 97/14260 décrit un système prévu pour augmenter la capacité d'un réseau cellulaire dans lequel les cellules sont affectées d'une couleur primaire et d'une couleur secondaire.

Il résulte des considérations précédentes que les fréquences du réseau peuvent être réparties en fréquences primaires et en fréquences secondaires. Les fréquences primaires qui suivent le motif de réutilisation à sept cellules assurent la qualité du service tandis que les fréquences secondaires qui suivent un motif à plus fort taux de réutilisation, 1/3 par exemple, permettent d'augmenter le volume des communications.

Toute cellule dispose donc d'un jeu de fréquences primaires et d'un jeu de fréquences secondaires, chaque jeu comprenant au moins une fréquence. Naturellement, la fréquence balise d'une cellule appartient à son jeu de fréquences primaires. Pour des raisons de commodité, on identifie une cellule par une couleur primaire et une couleur secondaire qui correspondent respectivement au jeu de fréquences primaires et au jeu de fréquences secondaires qui lui sont attribuées.

Par ailleurs, comme dans tout système de transmission, le rapport signal à interférences est une donnée essentielle pour qualifier la liaison entre un terminal et le réseau. Ainsi, dans le GSM, on utilise un indicateur nommé RXQUAL qui représente une valeur quantifiée de faible dynamique du taux d'erreur estimé de la liaison.

Entre autres, le rapport signal à interférences est utilisé lors des procédures de changement de cellule, procédures connues sous le nom de handover. En effet, lorsque la liaison entre le terminal et la cellule à laquelle il est connecté se dégrade, il convient de rechercher une nouvelle cellule permettant d'assurer une nouvelle liaison avec ce terminal qui soit de meilleure qualité que l'ancienne liaison.

Le rapport signal à interférences est également utilisé lorsque le réseau permet de faire de la régulation de puissance. En effet, plus ce rapport est élevé, plus la puissance du signal émis dans cette liaison peut être diminuée.

Ce rapport signal à interférences est représentatif de la qualité d'une liaison déjà établie entre le terminal et le réseau à un instant donné. Il ne prend pas en compte l'évolution possible de ce réseau, notamment son taux de charge et, partant, une dégradation éventuelle de cette liaison. Or, il est important de disposer d'une donnée fiable sur la dégradation potentielle d'une liaison déjà établie ou sur la qualité que l'on peut attendre d'une nouvelle liaison appelée à remplacer la précédente.

La présente invention a ainsi pour objet un dispositif d'estimation prévisionnelle du rapport signal à interférences dans un réseau cellulaire de radiocommunications.

Selon l'invention, ce dispositif s'applique dans un réseau utilisant en émission des jeux de fréquences primaires et des jeux de fréquences secondaires, le taux de réutilisation des jeux de fréquences secondaires étant plus élevé que celui des jeux de fréquences primaires. Chaque cellule est identifiée par une couleur primaire et une couleur secondaire qui correspondent respectivement au jeu de fréquences primaires et au jeu de fréquences secondaires qui lui sont attribués. Le dispositif dispose du niveau reçu par ce terminal d'une cellule de rattachement à laquelle il est connecté et dispose également du niveau reçu par ce terminal de cellules voisines de couleur primaire différente de celle de la cellule de rattachement. Il sélectionne une cellule de référence parmi cette cellule de rattachement et les cellules voisines, il produit un bruit potentiel comprenant la somme des niveaux reçus des cellules de même couleur secondaire que celle de la cellule de référence compte non tenu du niveau reçu de cette cellule de référence, il détermine un niveau de bruit en faisant la somme de ce bruit potentiel et d'un plancher de bruit affecté d'un coefficient de pondération, et il fournit l'estimation prévisionnelle du rapport signal à interférences du terminal dans la cellule de référence en divisant le niveau reçu de cette cellule de référence par le niveau de bruit.

En effet, le terminal, dès qu'il est connecté et même s'il est en état de veille, mesure périodiquement le niveau du signal reçu de la cellule de rattachement. Il mesure également le niveau reçu sur des fréquences primaires que le réseau lui indique. Ces fréquences primaires sont généralement les fréquences balises des cellules voisines qui pourraient prendre la succession de la cellule de rattachement en cas de handover. Dans le GSM, le terminal retransmettra le niveau du signal reçu de la cellule de rattachement et celui des six meilleures cellules voisines au réseau bien qu'il fasse des mesures sur un nombre de fréquences plus important.

Il est couramment admis, en première approximation, que la principale source d'interférences d'une liaison est due aux autres liaisons qui utilisent la même fréquence. Or, lorsque le réseau est chargé au maximum et si aucune régulation de puissance n'est mise en oeuvre, c'est-à-dire dans les pires conditions, le terminal recevra une fréquence secondaire et une fréquence primaire de n'importe quelle cellule à un niveau équivalent. Ainsi, pour une cellule de référence, les interférences vues du terminal peuvent être représentées par la somme des niveaux reçus des autres cellules qui utilisent les mêmes fréquences secondaires que cette cellule de référence.

Pour améliorer l'estimation, lorsque le dispositif dispose également des niveaux reçus par le terminal de cellules environnantes identifiées comme utilisant des fréquences secondaires adjacentes à celles qui sont utilisées par la cellule de référence, le réseau étant ainsi conçu qu'une fréquence adjacente est affectée d'un coefficient d'atténuation prédéterminé à la réception, ce bruit potentiel est augmenté du produit de ce coefficient d'atténuation et de la somme des niveaux reçus de ces cellules environnantes.

Il est en effet souhaitable d'affiner l'approximation précédente, car si la principale source d'interférences d'une liaison définie est due à d'autres liaisons qui utilisent la même fréquence, une autre source d'interférences non négligeable est due à des liaisons encore différentes qui utilisent une fréquence adjacente.

Il peut toutefois arriver qu'aucune des mesures retenues par le dispositif objet de l'invention ne concerne des cellules utilisant le même jeu de fréquences secondaires que la cellule de référence ou utilisant des fréquences adjacentes. Dans ce cas, il n'est pas réaliste de considérer que les interférences soient nulles. Il convient donc de fixer un plancher de bruit. La solution la plus simple consiste à choisir pour ce plancher de bruit une valeur prédéterminée en-dessous de laquelle il est très peu probable que celle des interférences descende.

Si la somme des niveaux reçus des cellules voisines de même couleur secondaire que la cellule de référence est différente de zéro, le coefficient de pondération sera choisi nul de préférence.

Par contre, si la somme des niveaux reçus des cellules voisines de même couleur secondaire que la cellule de référence est égale à zéro, ce coefficient de pondération sera choisi non nul de préférence.

Ce dispositif fournit donc une estimation de ce que pourrait devenir le rapport signal à interférences dans la cellule de référence, si le réseau fonctionnait dans de mauvaises conditions, et ceci indépendamment de la qualité intrinsèque de la ou des liaisons sur lesquelles le terminal effectue les mesures de niveau.

Avantageusement, une autre solution pour fixer le plancher de bruit consiste à lui affecter la valeur du plus faible des niveaux reçus par le terminal compte non tenu du niveau reçu de la cellule de référence.

Selon une caractéristique additionnelle, le réseau prévoyant une fréquence balise distincte dans chaque jeu de fréquences primaires, le niveau reçu d'une des cellules voisines est mesuré sur la fréquence balise qui lui est attribuée.

De préférence, le niveau reçu d'une cellule voisine est identifié par la couleur primaire et la couleur secondaire de cette cellule.

On lève ainsi l'ambiguïté sur l'identité de la cellule voisine qui est reçue par le terminal.

On peut prévoir que le dispositif soit disposé dans le terminal ou bien dans le réseau.

La présente invention apparaîtra maintenant de manière plus explicite dans le cadre de la description qui suit d'un mode de réalisation donné à titre illustratif en référence aux figures annexées qui représentent :

- la figure 1, une représentation synoptique d'une partie du réseau,
- la figure 2, un schéma du dispositif.

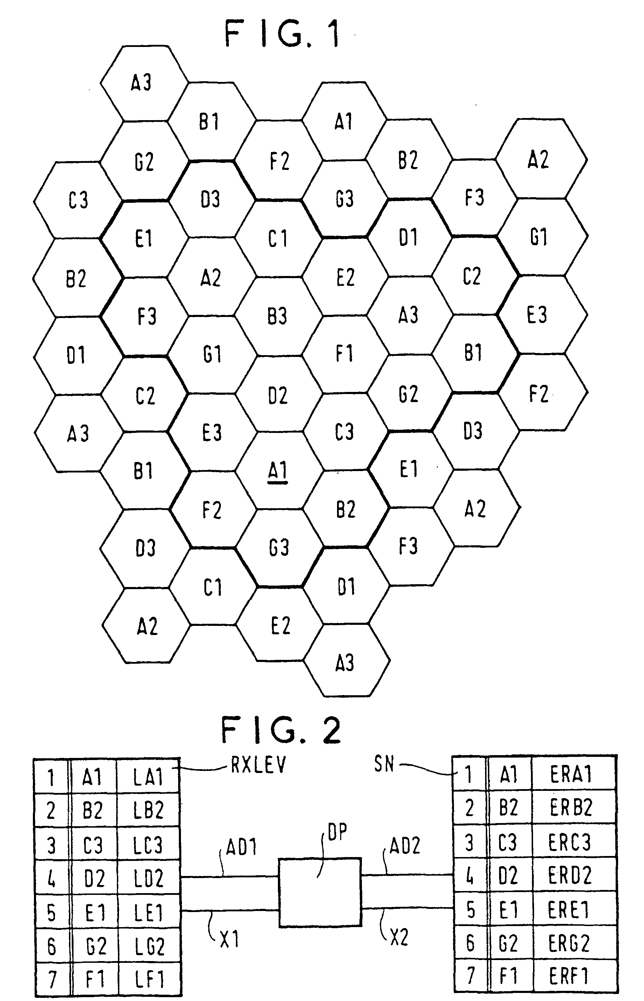

L'exemple de réalisation de l'invention décrit ci-après en référence à la figure 1 adopte la représentation d'un réseau cellulaire à structure hexagonale.

Les jeux de fréquences primaires suivent un motif de réutilisation à sept cellules. Chacun de ces jeux est identifié par une lettre de A à G et comprend au moins une fréquence, la fréquence balise BCCH dans le cas du GSM. Les jeux de fréquences secondaires suivent un motif de réutilisation à trois cellules. Chacun de ces jeux est identifié par un chiffre de 1 à 3 et comprend au moins une fréquence, généralement une fréquence de trafic.

Chaque cellule peut ainsi être repérée par une couleur primaire (une lettre) et une couleur secondaire (un chiffre) qui représentent respectivement le jeu de fréquences primaires et le jeu de fréquences secondaires qui lui sont attribuées.

La combinaison des deux motifs de réutilisation définit un nouveau motif à vingt-et-une cellules délimité en gras sur la figure. La couverture souhaitée du réseau est obtenue en dupliquant ce nouveau motif par translation.

Un terminal est maintenant supposé répertorié dans la cellule A1 qui figure dans le motif à vingt-et-une cellules délimité en gras. Cette cellule A1 est donc la cellule de rattachement du terminal qui est, soit en mode communication, soit en mode veille.

Quel que soit le mode du terminal, celui-ci mesure périodiquement le niveau LA1 du signal reçu de la cellule de rattachement A1. En mode veille, ce signal est généralement celui qui est utilisé pour maintenir la relation entre le terminal et le réseau, notamment au cas où surviendrait une demande de communication ; dans le cas du GSM, il s'agirait d'un canal de signalisation nommé SDCCH.

D'autre part, à la demande du réseau, notamment pour préparer un handover éventuel en cas de défaillance de la liaison avec la cellule de rattachement, le terminal mesure également le niveau reçu de certaines cellules voisines identifiées sur l'une des fréquences des jeux de fréquences primaires B, C, D, E, F, G qui leur sont attribuées. Dans le cas du GSM, cette fréquence est préférentiellement la fréquence BCCH. La notion de cellules voisines doit s'entendre dans un sens très large en se référant aux conditions de propagation radio. Il s'agit en fait des cellules les mieux reçues. Il apparaît de plus que le terminal pourrait de lui-même procéder à l'analyse des cellules voisines sans que le réseau ne lui en donne l'instruction.

On remarque que les cellules de premier rang qui sont géographiquement les plus proches de la cellule de rattachement sont identifiées B2, C3, D2, E3, F2 et G3. On remarque également que, du fait de la structure du réseau, les cellules de second rang qui sont adjacentes aux cellules de premier rang, sont au nombre de douze et sont identifiées B1, D3, C1, E2, D1, F3, E1, G2, F1, B3, G1 et C2. Ainsi, parmi les dix-huit cellules qui sont, soit de premier rang, soit de second rang, aucune cellule n'a la même couleur primaire et la même couleur secondaire que l'une quelconque des autres cellules. Par contre, parmi ces dix-huit cellules, six triplets ont la même couleur primaire.

Le problème se pose donc de savoir si le signal reçu sur une fréquence primaire, celle du jeu F par exemple, provient de la cellule qui est la plus proche F2 ou bien s'il provient de l'une des deux cellules de second rang F1, F3. En effet, un écran de propagation peut être interposé entre le terminal et l'une quelconque de ces trois cellules F1, F2, F3.

Une solution simple pour résoudre le problème consiste à prévoir que les cellules diffusent leur couleur secondaire sur la fréquence primaire destinée à être évaluée par le terminal, de sorte que celui-ci puisse identifier la provenance de cette fréquence primaire.

Le terminal dispose donc de la couleur primaire et de la couleur secondaire de la cellule qui a émis le signal sur lequel il a fait une mesure de niveau. On suppose que les six mesures de niveau notées LB2, LC3, LD2, LE1, LG2, LF1 proviennent des cellules respectives B2, C3, D2, E1, G2, F1.

Par ailleurs, du fait de l'emploi d'un motif de réutilisation à trois cellules pour les jeux de fréquences secondaires, on se place dans le cas courant où l'une au moins des fréquences d'un jeu quelconque est adjacente à l'une au moins des fréquences de chacun des deux autres jeux de fréquences secondaires. Cela résulte d'une répartition rationnelle des fréquences disponibles.

Le dispositif de l'invention, en référence à la figure 2, comprend donc une première mémoire RXLEV dans laquelle figure un enregistrement par mesure. Chaque enregistrement comprend la cellule concernée, A1 par exemple, et le niveau reçu LA1 de cette cellule.

Naturellement, si les jeux de fréquences secondaires n'étaient pas tous adjacents du fait d'un motif de réutilisation à taux plus faible ou bien d'une répartition différente des fréquences du réseau, il faudrait prévoir une information additionnelle dans la mémoire RXLEV.

Le dispositif comprend également un processeur numérique DP en charge de l'élaboration du rapport signal à interférences dans l'une ou l'autre des cellules qui ont fait l'objet de mesures par le terminal. Au moyen d'un premier signal d'adresse AD1, ce processeur recherche dans un premier signal de donnée X1 provenant de la mémoire RXLEV, la cellule de référence pour laquelle il convient de rechercher ce rapport signal à interférences. Il s'agit par exemple de la cellule de rattachement A1. Le niveau reçu LA1 de cette cellule est alors enregistré dans une variable S.

Ensuite, après avoir initialisé les variables N1 et N2 à zéro, le processeur examine tous les autres enregistrements.

Lorsque la cellule d'un enregistrement a la même couleur secondaire 1 que la cellule de référence, le niveau reçu est ajouté à la variable N1.

Lorsque la cellule d'un enregistrement a une couleur secondaire qui indique que le jeu de fréquences secondaires correspondant est adjacent à celui de la cellule de référence, c'est-à-dire si cette couleur secondaire est différente de celle de la cellule de référence dans l'exemple adopté, le niveau reçu est ajouté à la variable N2.

Quand toute la mémoire RXLEV a été parcourue, les différentes variables ont les valeurs suivantes :

$$S = LA1$$

$$N1 = LE1 + LF1$$

$$N2 = LB2 + LC3 + LD2 + LG2.$$

La variable N1 représente les interférences provoquées par des liaisons utilisant les mêmes fréquences que la cellule de référence tandis que la variable N2 représente les interférences provoquées par des liaisons utilisant des fréquences adjacentes à celles de cette cellule de référence.

En effet, le filtre de canal n'étant pas parfait, lorsque le terminal est accordé sur une fréquence sélectionnée, il reçoit également, pour partie, les fréquences adjacentes, celles-ci étant d'affectées d'un coefficient d'atténuation $\alpha$.

Le processeur produit donc une estimation prévisionnelle du rapport signal à interférences ER dans la cellule de référence comme suit :

$$ER = \frac{S}{N1 + \alpha N2} \qquad (1)$$

Lorsqu'il s'agit de la cellule de rattachement, ce rapport vaut :

$$ER = \frac{LA1}{LE1 + LF1 + \alpha(LB2 + LC3 + LD2 + LG2)}$$

L'invention permet également d'établir une estimation prévisionnelle du rapport signal à interférences dans n'importe quelle autre cellule où le terminal a fait des mesures.

Ainsi, si l'on choisit la cellule B2 comme cellule de référence :

$$S = LB2$$

$$N1 = LD2 + LG2$$

$$N2 = LA1 + LC3 + LE1 + LF1$$

$$ER = \frac{LB2}{LD2 + LG2 + \alpha(LA1 + LC3 + LE1 + LF1)}$$

L'expression de ce rapport signal à interférences telle qu'elle résulte de l'équation (1) représente un mode de réalisation préférentiel de l'invention.

Cependant, l'invention s'applique également si l'on ne prend pas en compte les interférences N2 dues aux liaisons utilisant des fréquences adjacentes à celles de la cellule de référence, ce qui revient à considérer que le coefficient d'atténuation $\alpha$ vaut zéro. La complexité du dispositif s'en trouve alors réduite au détriment d'une moins bonne précision de l'estimation qui peut alors s'exprimer comme suit :

$$ER = S/N1 \qquad\qquad (2)$$

Si l'on applique cette équation (2) pour estimer le rapport signal à interférences dans la cellule C3, on s'aperçoit que la variable N1 vaut zéro et ce rapport prend alors une valeur aberrante. En effet, il n'est pas concevable que les interférences soient nulles et il convient donc de fixer un plancher de bruit P au-dessous duquel le bruit réel ne peut pas descendre.

La solution la plus simple consiste à retenir une valeur prédéterminée qui reflète la réalité du réseau. Cette valeur peut être établie de manière empirique ou bien résulter d'une simulation, ceci à titre d'exemple.

Une autre solution consiste à considérer que le plancher de bruit est égal au plus faible des niveaux reçus de toutes les cellules en excluant toutefois le niveau reçu de la cellule de référence. Naturellement, si l'expression N1 + $\alpha$N2 qui figure dans l'équation (1) était également nulle, il conviendrait là encore d'utiliser un plancher de bruit.

On peut même considérer qu'il serait judicieux de retenir un plancher de bruit si la variable N2 est nulle et si la variable N1 est non nulle.

En fait, si l'on définit le bruit potentiel comme l'expression N1 ou (N1 + $\alpha$N2) selon le cas, il convient de retenir comme niveau de bruit la somme de ce bruit potentiel et du plancher de bruit P affecté d'un coefficient de pondération k. Il s'agit d'une combinaison linéaire des variables N1, N2 et du plancher de bruit P.

Ainsi, si l'on prend en compte les fréquences adjacentes, le bruit potentiel vaut (N1 + $\alpha$N2 + kP). Généralement, lorsque le plancher de bruit P est inférieur à (N1 + $\alpha$N2), on force le coefficient de pondération k à zéro et l'estimation prévisionnelle vaut ER = S/(N1 + $\alpha$N2), tandis que dans le cas contraire cette estimation vaut ER = S/kP.

Par contre, si l'on ne considérait pas les fréquences adjacentes, l'estimation prévisionnelle ER vaudrait, soit S/N1, soit S/kP selon que le plancher de bruit est inférieur ou supérieur au bruit potentiel N1.

En fait il est souhaitable d'affecter une valeur non nulle au coefficient de pondération k dès lors que la variable N1 est nulle, mais c'est également possible dès lors que l'une, l'autre ou les deux variables N1 et N2 sont nulles.

Le processeur DP enregistre donc dans une seconde mémoire SN au moyen d'un deuxième signal d'adresse AD2 et d'un deuxième signal de données X2, la cellule concernée en association avec l'estimation du rapport signal à interférences pour cette cellule.

Le dispositif peut prendre place dans le terminal puisque celui-ci effectue les mesures nécessaires au calcul de l'estimation prévisionnelle.

Le dispositif peut également être situé dans le réseau, station de base ou contrôleur de stations de base, lorsqu'il est prévu que le terminal retransmette les mesures qu'il a effectuées.

**Revendications**

1. Dispositif d'estimation prévisionnelle du rapport signal à interférences d'un terminal dans un réseau cellulaire de radiocommunications, ce réseau utilisant en émission des jeux de fréquences primaires et des jeux de fréquences secondaires, le taux de réutilisation des jeux de fréquences secondaires étant plus élevé que celui des jeux de fréquences primaires, chaque cellule étant identifiée par une couleur primaire (A, B, C, ..., G) et une couleur secondaire (1, 2, 3) correspondant respectivement au jeu de fréquences primaires et au jeu de fréquences secondaires qui lui sont attribués, **caractérisé en ce que**,
   disposant du niveau reçu par ce terminal d'une cellule de rattachement (A1) à laquelle il est connecté,
   disposant également des niveau reçus (LB2, LC3, LD2, LE1, LG2, LF1) par ce terminal de cellules voisines (B2, C3, D2, E1, G2, F1) de couleur primaire différente de celle de ladite cellule de rattachement (A1), il comprend :

   des moyens pour sélectionner une cellule de référence (B2) parmi ladite cellule de rattachement et lesdites cellules voisines,
   des moyens pour produire un bruit potentiel comprenant la somme (N1) desdits niveaux reçus (LD2, LG2) des cellules (D2, G2) de même couleur secondaire que celle de ladite cellule de référence (B2) compte non tenu du niveau reçu (LB2) de cette cellule de référence (B2),
   des moyens pour déterminer un niveau de bruit en faisant la somme dudit bruit potentiel (N1) et d'un plancher de bruit (P) affecté d'un coefficient de pondération,
   des moyens pour fournir ladite estimation prévisionnelle du rapport signal à interférences du terminal dans ladite cellule de référence (B2) en divisant le niveau reçu de cette cellule de référence par ledit niveau de bruit.

**2.** Dispositif selon la revendication 1 **caractérisé en ce que**, disposant également des niveaux reçus par le terminal de cellules environnantes (A1, C3, E1, F1) identifiées comme utilisant des fréquences secondaires adjacentes à celles qui sont utilisées par ladite cellule de référence (B2),
le réseau étant ainsi conçu qu'une fréquence adjacente est affectée d'un coefficient d'atténuation prédéterminé à la réception,
ledit bruit potentiel est augmenté du produit dudit coefficient d'atténuation ($\alpha$)
et de la somme (N2) des niveaux reçus (LA1, LC3, LE1, LF1) desdites cellules environnantes (A1, C3, E1, F1).

**3.** Dispositif selon la revendication 1 ou 2 **caractérisé en ce que**, la somme (N1) des niveaux reçus (LD2, LG2) des cellules voisines de même couleur secondaire que ladite cellule de référence (B2) étant différente de zéro, ledit coefficient de pondération est nul.

**4.** Dispositif selon la revendication 1 ou 2 **caractérisé en ce que**, la somme (N1) des niveaux reçus (LD2, LG2) des cellules voisines de même couleur secondaire que ladite cellule de référence (B2) étant égale à zéro, ledit coefficient de pondération est non nul.

**5.** Dispositif selon l'une quelconque des revendications précédentes, **caractérisé en ce que** ledit plancher de bruit (P) est égal au plus faible desdits niveaux reçus compte non tenu du niveau reçu (LB2) de ladite cellule de référence (B2).

**6.** Dispositif selon l'une quelconque des revendications précédentes **caractérisé en ce que**,
le réseau prévoyant une fréquence balise distincte dans chaque jeu de fréquences primaires,
le niveau reçu d'une desdites cellules voisines est mesuré sur la fréquence balise qui lui est attribuée.

**7.** Dispositif selon l'une quelconque des revendications précédentes, **caractérisé en ce que** le niveau reçu d'une cellule voisine est identifié par la couleur primaire et la couleur secondaire de cette cellule.

**8.** Dispositif selon l'une quelconque des revendications précédentes, **caractérisé en ce qu'**il est disposé dans ledit terminal.

**9.** Dispositif selon l'une quelconque des revendications 1 à 7, **caractérisé en ce qu'**il est disposé dans ledit réseau.

**Patentansprüche**

**1.** Vorrichtung zum Vorausschätzen des Signal-Rausch-Verhältnisses eines Endgerätes in einem Mobilfunknetz, in welchem beim Senden Trägerfrequenzbänder und Modulationsfrequenzbänder verwendet werden, wobei der Wiederbenutzungsgrad der Modulationsfrequenzbänder höher als derjenige der Trägerfrequenzbänder ist und jede Funkzelle durch eine Hauptfarbe (A, B, C, ..., G) und eine Nebenfarbe (1, 2, 3) identifiziert ist, die jeweils dem Trägerfrequenzband und dem Modulationsfrequenzband entsprechen, die ihr zugeordnet sind, **dadurch gekennzeichnet, dass** sie über den Pegel verfügt, der von diesem Endgerät von einer Anschlusszelle (A1), mit welcher es verbunden ist, empfangen wird, und weiterhin über Pegel (LB2, LC3, LD2, LE1, LG2, LF1) verfügt, die von diesem Lndgerät von benachbarten Funkzellen (B2, C3, D2, E1, G2, F1) mit einer anderen Hauptfarbe als derjenigen der Anschlusszelle (A1) empfangen werden, und Mittel zum Auswählen einer Bezugsfunkzelle (B2) aus dieser Anschlusszelle und den benachbarten Funkzellen, Mittel zur Erzeugung eines potentiellen Rauschens, das die Summe (N1) der empfangenen Pegel (LD2, LG2) der Funkzellen (D2, G2) mit derselben Nebenfarbe wie die der Bezugsfunkzelle (B2) umfasst, wobei der von der Bezugsfunkzelle (B2) empfangene Pegel (LB2) unberücksichtigt bleibt, Mittel zur Bestimmung eines Rauschpegels, indem die Summe aus dem potentiellen Rauschen (N1) und einer Rauschhöhe (P), die mit einem GewichtungskoeSizienten versehen ist, gebildet wird, und Mittel zum Schicken der Vorausschätzung des Signal-Rausch-Verhältnisses des Endgerätes an die Bezugsfunkzelle (B2), wobei der von dieser Bezugsfunkzelle empfangene Pegel durch den Rauschpegel geteilt wird, umfasst.

**2.** Vorrichtung nach Anspruch 1, **dadurch gekennzeichnet, dass** sie ebenfalls über Pegel verfügt, die vom Endgerät von benachbarten Funkzellen (A1, C3, E1, F1) empfangen werden, die als solche identifiziert worden sind, die Modulationsfrequenzen nutzen, die denjenigen benachbart sind, die von der Bezugsfunkzelle (B2) verwendet werden, und das Funknetz so entworfen ist, dass eine benachbarte Frequenz mit einem beim Empfang festgelegten Dämpfungskoeffizienten belegt und das potentielle Rauschen um das Produkt aus dem Dämpfungskoeffizienten ($\alpha$) und der Summe (N2) der empfangenen Pegel (LA1, LC3, LE1, LF1) der benachbarten Funkzellen (A1, C3, E1, F1) vergrößert wird.

3. Vorrichtung nach Anspruch 1 oder 2, **dadurch gekennzeichnet, dass** die Summe (N1) der von den benachbarten Funkzellen mit derselben Nebenfarbe wie die der Bezugsfunkzelle (B2) empfangenen Pegel (LD2, LG2) ungleich Null und der Gewichrungskoeffizient gleich Null ist

4. Vorrichtung nach Anspruch 1 oder 2, **dadurch gekennzeichnet dass** die Summe (N1) der von den benachbarten Funkzellen mit derselben Nebenfarbe wie die der Bezugsfunkzelle (B2) empfangenen Pegel (LD2, LG2) gleich Null und der Gewichtungskoeffizient ungleich Null ist.

5. Vorrichtung nach einem der vorhergehenden Ansprüche, **dadurch gekennzeichnet, dass** die Rauschhöhe (P) gleich dem niedrigsten der empfangenen Pegel ist, wobei der empfangene Pegel (LB2) der Bezugsfunkzelle (B2) unberücksichtigt bleibt.

6. Vorrichtung nach einem der vorhergehenden Ansprüche, **dadurch gekennzeichnet, dass** im Funknetz ein bestimmtes Kontrollsignal in jedem Trägerfrequenzband vorgesehen und der von einer der benachbarten Funkzellen empfangene Pegel am ihm zugeordneten Kontrollsignal gemessen wird.

7. Vorrichtung nach einem der vorhergehenden Ansprüche, **dadurch gekennzeichnet, dass** der von einer benachbarten Funkzelle empfangene Pegel durch Hauptfarbe und Nebenfarbe dieser Zelle identifiziert wird.

8. Vorrichtung nach einem der vorhergehenden Ansprüche, **dadurch gekennzeichnet, dass** sie im Endgerät angeordnet ist.

9. Vorrichtung nach einem der Ansprüche 1 bis 7, **dadurch gekennzeichnet, dass** sie im Funknetz angeordnet ist.


**Claims**

1. A device for provisionally estimating the carrier-to-interference ratio of a terminal in a cellular mobile radio network which transmits sets of primary frequencies and sets of secondary frequencies and in which the rate of re-use of the sets of secondary frequencies is higher than that of the sets of primary frequencies and each cell is identified by a primary color (A, B, C, ..., G) and a secondary color (1, 2, 3) respectively corresponding to the set of primary frequencies and to the set of secondary frequencies which are allocated to it, the device being **characterized in that**, knowing the level received by said terminal from a local cell (A1) to which it is connected and knowing the levels (LB2, LC3, LD2, LE1, LG2, LF1) received by said terminal from neighboring cells (B2, C3, D2, E1, G2, F1) of different primary color to that of said local cell (A1), the device means for selecting a reference cell (B2) from said local cell and said neighboring cells, means for producing a potential noise including the sum (N1) of said levels (LD2, LG2) received from the cells (D2, G2) of the same secondary color as said reference cell (B2) without taking account of the level (LB2) received from that reference cell (B2), means for determining a noise level by summing said potential noise (N1) and a noise floor (P) subject to a weighting coefficient and means for supplying said provisional estimate of the carrier-to-interference ratio of the terminal in said reference cell (B2) by dividing the level received from that reference cell by said noise level.

2. A device according to claim 1, **characterized in that**, knowing also the levels received by the terminal from surrounding cells (A1, C3, E1, F1) identified as using secondary frequencies adjacent those used by said reference cell (B2), and the network being designed so that a received adjacent frequency is allocated a predetermined attenuation coefficient, said potential noise is increased by the product of said attenuation coefficient ($\alpha$) and the sum (N2) of the levels (LA1, LC3, LE1, LF1) received from said surrounding cells (A1, C3, E1, F1).

3. A device according to any one of claims 1 or 2, **characterized in that** said weighting coefficient is zero if the sum (N1) of the levels (LD2, LG2) received from the neighboring cells with the same secondary color as said reference cell (B2) is non-zero.

4. A device according to any one of claims 1 or 2, **characterized in that** said weighting coefficient is non- zero if the sum (N1) of the levels (LD2, LG2) received from the neighboring cells with the same secondary color as said reference cell (B2) is zero.

5. A device according to any one of the preceding claims, **characterized in that** said noise floor (P) is equal to the lowest of said received levels excluding the level (LB2) received from said reference cell (B2).

6. A device according to any one of the preceding claims, **characterized in that** if the network provides a separate beacon frequency in each set of primary frequencies the level received from one of said neighboring cells is measured on the beacon frequency allocated to it.

7. A device according to any one of the preceding claims, **characterized in that** the level received from a neighboring cell is identified by the primary color and the secondary color of that cell.

8. A device according to any one of the preceding claims, **characterized in that** it is part of said terminal.

9. A device according to any one of claims 1 to 7, **characterized in that** it is part of said network.

# F IG. 1

# F IG. 2